# EUROPÄISCHE PATENTSCHRIFT

(11) **EP 1 241 084 B1**
(45) Veröffentlichungstag und Bekanntmachung des Hinweises auf die Patenterteilung: **01.10.2003**
(21) Anmeldenummer: 02003946.7
(22) Anmeldetag: 22.02.2002
(51) Int. Cl.: B62D 25/14, B62D 1/16

(54) **Instrumententräger**
Dashboard carrier beam
Poutre pour tableau de bord

(30) Priorität: 16.03.2001 DE 10112738
(43) Veröffentlichungstag der Anmeldung: 18.09.2002
(73) Patentinhaber: Benteler Automobiltechnik GmbH, 33102 Paderborn (DE)
(72) Erfinder: Härtel, Wulf, 33184 Altenbeken (DE); Schaffranek, Björn, 33178 Borchen (SE); Wille, Andreas, 33102 Paderborn (DE)
(74) Vertreter: Ksoll, Peter, Dr.-Ing.

(56) Entgegenhaltungen:
- EP-A- 0 955 228
- DE-A- 3 939 822
- DE-A- 19 811 787
- US-A- 5 960 673
- PATENT ABSTRACTS OF JAPAN vol. 2000, no. 16, 8. Mai 2001 (2001-05-08) -& JP 2001 001911 A (ISEKI), 9. Januar 2001 (2001-01-09)
- PATENT ABSTRACTS OF JAPAN vol. 1997, no. 7, 31. Juli 1997 (1997-07-31) -& JP 09 072375 A (NIPPON SOKEN), 18. März 1997 (1997-03-18)

## Beschreibung

Die Erfindung betrifft einen Instrumententräger für ein Kraftfahrzeug mit einem zwischen den A-Säulen der Kraftfahrzeugkarosserie quer angeordneten Tragprofil.

Instrumententräger erstrecken sich bei einem Kraftfahrzeug zwischen den A-Säulen quer zur Fahrtrichtung. In herkömmlicher Bauweise besteht ein Instrumententräger im wesentlichen aus einem Tragprofil, z.B. einem Rohr. Ein solcher Vorschlag geht aus der DE 196 20 919 A1 hervor. Ein Tragprofil aus einem starren Hohlträger offenbart die DE 195 34 568 A1.

Im Bereich des Cockpits sind am Instrumententräger diverse Halterungen angeordnet für die Instrumententafel selber sowie zur Halterung bzw. Befestigung weiterer Fahrzeugkomponenten, wie Heizungs- oder Klimaanlage, Airbag, Lenksäule, Mittelkonsole, Sicherungskasten oder Handschuhfach.

Grundsätzlich muss der Instrumententräger verschiedene Funktionen erfüllen. Er dient neben der Versteifung der Karosserie zur Energieaufnahme im Crashfall und zum Verbinden verschiedener Raumpunkte bzw. zur Festlegung der diversen Halter. Ferner muss er für den Betrieb in unterschiedlichsten Frequenzbereichen geeignet sein. Bislang werden die Instrumententräger im Querschnitt ebenso wie in der Wandstärke nach der ersten Eigenfrequenz ausgelegt. Im Fahrbetrieb kann es dennoch zu Schwingungen des Instrumententrägers kommen, wodurch Vibrationen und/oder Körperschall erzeugt wird, was sich nachteilig auf die Innenraumakustik des Kraftfahrzeugs ebenso wie auf das Fahrverhalten bzw. den Fahrkomfort auswirkit. Diese Eigenschwingungen versucht man zu fixieren oder konstruktiv zu optimieren. Hierzu ist ein Halter am Instrumententräger vorgesehen, über den eine Festlegung an der Karosserie erfolgt.

Aus der EP 0 585 875 B1 ist ein Vibrationsdämpfungssystem für ein Kraftfahrzeug bekannt. Hier ist eine Vibrationsdetektionseinrichtung vorgesehen, die eine Vibration des Kraftfahrzeugs bzw. Teilen davon und der Luft innerhalb des Kraftfahrzeugs detektiert und auswertet. In Abhängigkeit hiervon werden zwei Vibratoren entsprechend so angeregt, dass die Fahrzeugschwingung und die Vibration der Luft innerhalb des Fahrzeugs gedämpft wird.

Durch die DE 198 11 787 A1 zählt eine Vibrationsminderungseinrichtung für ein Kraftfahrzeug zum Stand der Technik, die zwischen den Längsträgern und den Querträgern zum Front- oder Heckmodul hin angeordnet ist. Die Vibrationsminderungseinrichtung umfasst einen oder mehrere Piezoaktoren und soll eine verbesserte Dämpfung bewirken sowie eine Übertragung von Vibrationsschwingungen und Dröhngeräuschen zwischen den Längsträgern und dem Frontmodul oder dem Heckmodul verhindern.

Die US-A-5,960,673 sieht die Anordnung eines Dämpfungselements aus Gummi im Anbindungsbereich der Lenksäule an einem unteren Träger vor. Das Dämpfungselement ist als eine Gummilage gestaltet und wirkt ausschließlich passiv.

Der Erfindung liegt ausgehend vom Stand der Technik die Aufgabe zugrunde, einen Instrumententräger fahrzeugtechnisch zu verbessern, die Gestaltungsfreiheit bezüglich Querschnitt und Wandstärke zu vergrößern und gewichtsmäßig zu reduzieren.

Die Lösung dieser Aufgabe besteht nach der Erfindung in einem Instrumententräger gemäß Patentanspruch 1.

Kernpunkt der Erfindung bildet die Maßnahme, dem Tragprofil eine aktive Anordnung zur Schwingungsdämpfung zuzuordnen. Die Piezoelemente sind im Anbindungsbereich zwischen den A-Säulen und dem Tragprofil sowie im Anbindungsbereich der Lenksäule am Tragprofil positioniert. Bei Auftreten einer Schwingung des Instrumententrägers im Fahrbetrieb wird diese sensorisch erfasst und durch eine dann aktiv erzeugte Kompensationsschwingung gedämpft und quasi aufgehoben bzw. in einem anderen insbesondere höheren Frequenzbereich verschoben. Die Anordnung greift aktiv ein und erzeugt periodische Verformungs- und Spannungsamplituden, die in geeigneter Phasenlage den Effekt einer Schwingungsauslöschung bzw. Frequenzdämpfung erzielen. Zudem kann die Anordnung verbundene Bauteile entkoppeln, so dass auch durch diese Maßnahme ein wirksamer Beitrag zur Schwingungsdämpfung realisiert wird. Eine Überleitung der Schwingungen bzw. der des Kraftflusses im Verbindungsbereich einander angrenzender Bauteile wird vermieden.

Die Wirkung der erfindungsgemäßen Anordnung beruht folglich auf einer Dämpfung der Schwingungen, einer Verschiebung in andere Frequenzbereiche und/oder einer Entkopplung verbundener Bauteile.

Der Instrumententräger kann hierdurch im Querschnitt vereinfacht bzw. kleiner ausgelegt werden. Auch eine Wandstärkenreduktion ist möglich. Hierdurch ergibt sich eine Gewichtseinsparung. Ferner wird der Fahrkomfort erhöht. Des Weiteren können gegebenenfalls die bislang für eine Festlagerung erforderlich Halter entfallen oder konstruktiv einfacher ausgelegt werden. Auch diese Maßnahme trägt zu einer Gewichtsreduktion bei.

Die Erfindung ermöglicht mithin eine aktive Vibrations- und Lärmunterdrückung. Hierdurch wird das Fahrverhalten und der -komfort verbessert.

Für eine aktive Schwingungsdämpfung kommen unterschiedliche physikalische Systeme in Frage, welche Bauelemente umfassen, die elektrisch oder magnetisch aktivierbare Materialien als Aktuatoren und/oder Sensoren besitzen. Diese arbeiten mit einer Reglereinheit zusammen. Die Funktionsweise der Aktuator-/Sensorelemente kann auf der Piezoelektrika, der Magnetorestriktiva oder auch der von elektrorheologischen Fluiden beruhen.

Im Rahmen der Erfindung ist auch eine vorteilhafte Nachrüstung von eingesetzten Instrumententrägern möglich.

Vorteilhafte Ausgestaltungen des grundsätzlichen Erfindungsgedankens bilden Gegenstand der abhängigen Patentansprüche 2 und 3.

Im Rahmen der Erfindung ist eine Anordnung zur Schwingungsdämpfung vorgesehen, welche am Tragprofil vorgesehene adaptive Piezoelemente umfasst, die mit einem aktiven Regler zusammenwirken. Bei den Piezoelementen handelt es sich um piezokeramische Aktuator-/Sensorelemente, die als Faserverbundbauteil mit eingebetteten piezokeramischen Fasern und/oder Folien ausgeführt sind. Für eine Integration in Faserverbundstoffe eignen sich insbesondere dünne piezokeramische Scheibenelemente, die auch als Piezofolien bezeichnet werden, ebenso wie piezokeramische Fasern.

Grundsätzlich ist es möglich, Piezoelemente auch an angrenzenden Haltern des Instrumententrägers zu applizieren.

Bei den adaptiven Piezoelementen erfolgt eine Umsetzung von elektrischer Energie in mechanische Energie ohne bewegte Teile. Dies gewährleistet eine sehr schnelle Reaktion sowie eine lange Lebensdauer der Bauteile. Das Prinzip der Piezoelemente beruht darauf, dass die hierin eingebetteten Kristalle ihre Form unter dem Einfluss eines elektrischen Felds ändern. Dies ermöglicht eine aktive Anregung der Piezoelemente über den externen Regler und die Erzeugung einer Gegen- bzw. Kompensationsschwingung am Instrumententräger. Als piezokeramische Aktuatoren kommen bevorzugt Blei-Zirkonat-Titanat-Mischkeramiken mit hoher elektromechanischer Aktivität, das heißt großer relativer Längen-/Dickenänderung bei Anlegen einer elektrischen Spannung zum Einsatz.

Grundsätzlich können weitere Piezoelemente über den Instrumententräger verteilt angeordnet werden. Diese Maßnahme ermöglicht zudem, die Piezoelemente zur Schadenserkennung heranzuziehen. Sofern im Instrumententräger Risse oder Bruchschäden auftreten, können diese durch die Piezoelemente aufgrund des geänderten Schwingungsverhaltens erfasst bzw. erkannt werden.

Die Piezoelemente sind im Anbindungsbereich zwischen den A-Säulen und dem Tragprofil sowie im Anbindungsbereich der Lenksäule vorgesehen. Diese Positionierung ist vorteilhaft, weil über die Lenksäule ein Großteil der aus dem Fahrbetrieb resultierenden Schwingungen bzw. Vibrationen in den Instrumententräger geleitet werden. Ferner besteht die Möglichkeit, die Piezoelemente an dem Instrumententräger zugeordneten Haltern zu applizieren. Die Anordnung von Piezoelementen zwischen Bauteilen bewirkt den gewünschten Effekt einer Entkopplung. Hierdurch findet eine Unterbrechung des Kraftflusses statt.

Die Erfindung ist nachfolgend anhand einer Figur beschrieben, die in technisch vereinfachter Weise die schematische Darstellung eines Instrumententrägers zeigt.

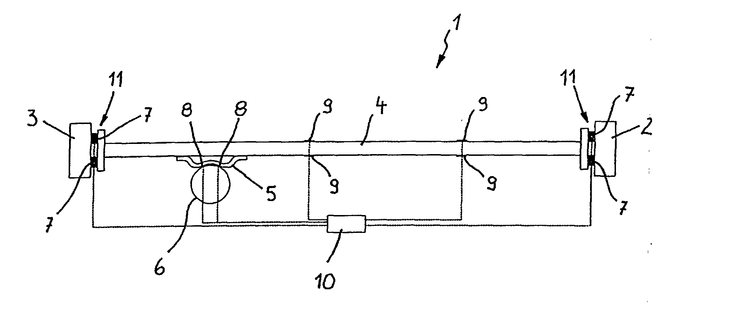

In der Figur ist ein Instrumententräger 1 dargestellt, der sich in einem Personenkraftwagen zwischen den hier andeutungsweise dargestellten A-Säulen 2, 3 der Kraftfahrzeugkarosserie quer zur Fahrtrichtung erstreckt und dort in geeigneter Weise festgelegt ist.

Der Instrumententräger 1 umfasst ein hohles Tragprofil 4, das die Instrumententafel trägt und zur Halterung bzw. Befestigung verschiedener Fahrzeugkomponenten wie Heizungs- oder Klimaanlage, Airbag, Mittelkonsole, Sicherungskasten oder Handschuhfach dient.

Die Lenksäulenanbindung ist in der Figur mit 5 bezeichnet. Die Lenksäule selbst hat das Bezugszeichen 6.

Dem Tragprofil 4 ist eine aktiv wirksame Anordnung zur Schwingungsdämpfung zugeordnet. Hierzu sind keramische Piezoelemente 7, 8, 9 am Tragprofil 4 appliziert, die mit einem Regler 10 zusammenwirken. Die Piezoelemente 7, 8, 9 vereinigen einen Sensor und einen Aktuator in einem Bauteil. Der Regler 10 ist extern im Kraftfahrzeug angeordnet. Die Spannungsversorgung für die Anordnung zur Schwingungsdämpfung ist in der Figur nicht dargestellt. Üblicherweise wird sie durch eine 12-Volt- oder 24-Volt-Spannungsquelle realisiert.

Man erkennt, dass die Piezoelemente 7 im Anbindungsbereich 11 zwischen den A-Säulen 2, 3 und dem Tragprofil 4 positioniert sind. Die Piezoelemente 8 sind zwischen der Lenksäulenanbindung 5 und der Lenksäule 6 platziert. Die Piezoelemente 9 sind auf dem Tragprofil 4 appliziert, beispielsweise aufgeklebt.

Die Anordnung zur Schwingungsdämpfung beeinflusst über die applizierten keramischen Piezoelemente 7, 8, 9 das Schwingungsverhalten des Instrumententrägers 1 aktiv. Im Betrieb auftretende Eigenschwingungen des Instrumententrägers 1 werden erfasst, ausgewertet und über die Aktuatoren eine Kompensationsschwingung aufgebracht. Diese wird durch die Richtung des elektrischen Felds und die Polarisationsrichtung gesteuert. Hierdurch wird eine periodische Verformungs- und Spannungsamplitude generiert, die in geeigneter Phasenlage eine Schwingungsauslöschung bzw. Dämpfung oder Verschiebung bzw. Entkopplung erzielt. Die aus dem Betrieb resultierenden störenden Schwingungen werden auf diese Weise direkt am Ort der Entstehung bekämpft. Hierdurch erfolgt eine Schwingungs- und Körperschalldämmung. Infolge dessen kann sowohl der Querschnitt als auch die Wandstärke des Instrumententrägers 1 reduziert werden, wodurch eine Gewichtseinsparung erzielt wird. Auch mögliche Halterungen zur Befestigung des Instrumententrägers 1 können entfallen oder leichter ausgeführt werden, was eine weitere Gewichtseinsparung ermöglicht.

### Bezugszeichenaufstellung

1 - Instrumententräger
2- A-Säule
3 - A-Säule
4 - Tragprofil
5 - Lenksäulenanbindung
6 - Lenksäule
7 - Piezoelement
8 - Piezoelement
9- Piezoelement
10- Regler
11 - Anbindungsbereich

## Patentansprüche

1. Instrumententräger für ein Kraftfahrzeug, der ein sich zwischen den A-Säulen (2, 3) der Kraftfahrzeugkarosserie erstreckendes Tragprofil (4) aufweist, wobei am Tragprofil (4) eine aktive Anordnung zur Schwingungsdämpfung angeordnet ist, die Anordnung zur Schwingungsdämpfung am Trägprofil (4) vorgesehene adaptive Piezoelemente (7, 8, 9) sowie einen mit diesen zusammenwirkenden Regler (10) umfasst, wobei Piezoelemente (7) im Anbindungsbereich (11) zwischen den A-Säulen (2, 3) und dem Tragprofil (4) und Piezoelemente (8) im Anbindungsbereich (5) der Lenksäule (6) am Tragprofil positioniert sind.

2. Instrumententräger nach Anspruch 1, **dadurch gekennzeich**n e t, dass die Piezoelemente (7, 8, 9) als Faserverbundteil mit eingebetteten piezokeramischen Fasern und/oder Folien ausgeführt sind.

3. Instrumententräger nach Anspruch 1 oder 2, **dadurch gekennzeichnet, dass** Piezoelemente (9) am Tragprofil (4) angeordnet sind, die zur Schadenserkennung herangezogen werden.

## Claims

1. A dashboard carrier beam for a motor vehicle and comprising a support profile (4) extending between the A-columns (2, 3) of the vehicle body, wherein an active arrangement for vibration damping is disposed on the support profile (4), the vibration-damping arrangement comprises adaptive piezo elements (7, 8, 9) on the support profile (4) and co-operating with a control unit (10), wherein piezo elements (7) are positioned in the connecting region (11) between the A-columns (2, 3) and the support profile (4) and piezo elements (8) are positioned in the region (5) where the steering column (6) is connected to the support profile.

2. A dashboard carrier beam according to claim 1, **characterised in that** the piezo elements (7, 8, 9) are composite fibre parts with embedded piezo ceramic fibres and/or sheets.

3. A dashboard carrier beam according to claim 1 or 2, **characterised in that** piezo elements (9) disposed on the support profile (4) are used for damage recognition.

## Revendications

1. Porte-instruments pour un véhicule automobile, qui comprend un profilé porteur (4) s'étendant entre les colonnes A (2, 3) de la carrosserie de véhicule automobile, un agencement actif destiné à l'amortissement d'oscillations étant agencé sur le profilé porteur (4), l'agencement destiné à l'amortissement d'oscillations comprenant des éléments piézoélectriques adaptatifs (7, 8, 9) prévus sur le profilé porteur (4) ainsi qu'un régulateur (10) coopérant avec ceux-ci, les éléments piézoélectriques (7) étant positionnés dans la zone de liaison (11) entre les colonnes A (2, 3) et le profilé porteur (4), et des éléments piézoélectriques (8) sont positionnés dans la zone de liaison (5) de la colonne de direction (6) sur le profilé porteur.

2. Porte-instruments selon la revendication 1, **caractérisé en ce que** les éléments piézoélectriques (7, 8, 9) sont réalisés sous forme de pièces composites à fibres présentant des fibres et/ou des feuilles piézo-céramiques noyées.

3. Porte-instruments selon l'une ou l'autre des revendications 1 et 2, **caractérisé en ce que** des éléments piézoélectriques (9) sont agencés sur le profilé porteur (4), ces éléments piézoélectriques (9) étant utilisés pour la reconnaissance d'endommagements.
